# EUROPEAN PATENT SPECIFICATION

(11) **EP 3 731 107 B1**
(45) Date of publication and mention of the grant of the patent: **27.10.2021**
(21) Application number: 18901279.2
(22) Date of filing: 17.01.2018
(51) Int. Cl.: G06F 16/2458, G06F 21/00

(54) **DATA MANAGEMENT DEVICE, SEARCH DEVICE, REGISTRATION DEVICE, DATA MANAGEMENT METHOD, AND DATA MANAGEMENT PROGRAM**
DATENVERWALTUNGSVORRICHTUNG, SUCHVORRICHTUNG. REGISTRIERVORRICHTUNG, DATENVERWALTUNGSVERFAHREN UND DATENVERWALTUNGSPROGRAMM
DISPOSITIF DE GESTION DE DONNÉES, DISPOSITIF DE RECHERCHE, DISPOSITIF D'ENREGISTREMENT, PROCÉDÉ DE GESTION DE DONNÉES ET PROGRAMME DE GESTION DE DONNÉES

(43) Date of publication of application: 28.10.2020
(73) Proprietor: Mitsubishi Electric Corporation, Tokyo 100-8310 (JP)
(72) Inventor: HAYASAKA, Kenichiro, Tokyo 100-8310 (JP); KAWAI, Yutaka, Tokyo 100-8310 (JP); HIRANO, Takato, Tokyo 100-8310 (JP); KOSEKI, Yoshihiro, Tokyo 100-8310 (JP)
(74) Representative: Pfenning, Meinig & Partner mbB
(86) International application number: PCT/JP2018/001225
(87) International publication number: WO 2019/142265

(56) References cited:
- WO-A1-2017/221308
- JP-A- 2011 146 895
- JP-B2- 6 075 017
- WANG HAIJIANG ET AL: "Secure and efficient encrypted keyword search for multi-user setting in cloud computing", PEER-TO-PEER NETWORKING AND APPLICATIONS, SPRINGER, US, vol. 12, no. 1, 2 January 2018 (2018-01-02), pages 32-42, XP036675384, ISSN: 1936-6442, DOI: 10.1007/S12083-017-0622-0 [retrieved on 2018-01-02]
- XU PENG ET AL: "Public-Key Encryption with Fuzzy Keyword Search: A Provably Secure Scheme under Keyword Guessing Attack", IEEE TRANSACTIONS ON COMPUTERS, IEEE, USA, vol. 62, no. 11, 1 November 2013 (2013-11-01), pages 2266-2277, XP011527741, ISSN: 0018-9340, DOI: 10.1109/TC.2012.215 [retrieved on 2013-09-25]
- DONG JIN PARK ET AL: "Searchable Keyword-Based Encryption", IACR, INTERNATIONAL ASSOCIATION FOR CRYPTOLOGIC RESEARCH, vol. 20060122:032312, 22 January 2006 (2006-01-22), pages 1-13, XP061001562, [retrieved on 2006-01-22]
- RAKESH, A. et al.: "Information Sharing Across Private Databases", SIGMOD 2003. PROCEEDINGS OF THE ACM SIGMOD INTERNATIONAL CONFERENCE ON MANAGEMENT OF DATA, June 2003 (2003-06), pages 86-97, XP058330182, SAN DIEGO DOI: 10.1145/872757.872771
- Kenichiro Hayasaka, Yutaka Kawai, Yoshihiro Koseki, Takato Hirano, Mitsugu Iwamoto, Kazuo Ota: "3C2-1. Towards Common Key Secret Retrieval that Can be Used by Multiple Users", 2018 Symposium on Cryptography and Information Security, 23 January 2018 (2018-01-23), pages 1-7, XP009521735, JP

## Description

### Technical Field

The present invention relates to a searchable encryption technique for searching for data while the data remains encrypted.

### Background Art

Searchable encryption is a technique that allows data to be searched for while the data remains encrypted. Currently, cloud services are beginning to be in widespread use, and cloud storage which is inexpensive and the use of which can be started readily is becoming common. When data including confidential information is managed on a cloud, the data needs to be stored after being encrypted in order to avoid the risk of information leakage. The searchable encryption allows a search to be performed over encrypted data without decryption, and is thus a technique that can achieve both security and functionality.

In the searchable encryption, a search is realized using two encrypted keywords. A first one is a ciphertext of a keyword to be associated with data, which is called an encrypted tag. A second one is a ciphertext of a keyword to be searched for, which is called a trapdoor.

In data registration, encrypted data and an encrypted tag are registered in a storage server. The encrypted tag is stored as an encrypted index in association with the data associated with the encrypted tag or in association with an identifier of the data. In the searchable encryption, an encrypted tag that matches a trapdoor transmitted from a searcher is found in the encrypted index without decryption, thereby realizing a search without revealing information on data and keywords.

The searchable encryption can be broadly divided into common-key searchable encryption and public-key searchable encryption. The common-key searchable encryption and the public-key searchable encryption have different characteristics as described below.

The public-key searchable encryption uses respectively different keys for generating an encrypted tag and for generating a trapdoor, whereas the common-key searchable encryption uses the same key for generating an encrypted tag and for generating a trapdoor. The common-key searchable encryption can perform a search process faster than the public-key searchable encryption.

Patent Literature 1 describes converting a ciphertext and then transmitting the converted ciphertext to a user. Patent Literature 1 uses the common-key searchable encryption, which generates an encrypted index and a trapdoor with the same key.

Patent Literature 2 describes a technique that allows even ciphertexts encrypted with different secret keys to be compared with each other. In Patent Literature 2, a part of each ciphertext to be used for comparison is encrypted so as to be not dependent on the secret key.

Non-Patent Literature 1 describes a common-key searchable encryption technique by a plurality of searchers. In Non-Patent Literature 1, all users encrypt keywords with the same random number r to perform searches. Non-Patent Literature 2 discloses a method for secure and efficient encrypted keyword search for multiple users.

### Citation List

### Patent Literature

Patent Literature 1: JP 2016-012897 A
Patent Literature 2: JP 2015-022318 A

### Non-Patent Literature

Non-Patent Literature 1: Reza Curtmola, Juan A. Garay, Seny Kamara, Rafail Ostrovsky, "Searchable symmetric encryption: improved definitions and efficient constructions", ACM Conference on Computer and Communications Security 2006, pp.79-88, 2006.

Non-Patent Literature 2: WANG HAIJIANG ET AL: "Secure and efficient encrypted keyword search for multi-user setting in cloud computing", PEET-TO-PEER NETWORKUNG AND APPLICATIONS, SPRINGER, US, vol. 12, no. 1, 2 January 2018 (2018-01-02), pages 32-42, XP036675384, ISSN: 1936-6442, DOI: 10.1007/S12083-017-0622-0

### Summary of Invention

### Technical Problem

In the existing common-key searchable encryption, the same key is used for generating encrypted tags and for generating trapdoors. Therefore, when the common-key searchable encryption is used by a plurality of users, a problem is that deciphering of encrypted tags and trapdoors and spoofing by forging keys are possible.

It is an object of the present invention to make it possible to prevent deciphering and spoofing.

### Solution to Problem

A data management device according to the present invention includes
a trapdoor acquisition unit to acquire a trapdoor t(s) resulting from converting a search word s by a map sk_U' assigned to an identifier U' among maps sk that differ for each identifier;
a search ciphertext generation unit to convert the trapdoor t(s) acquired by the trapdoor acquisition unit by a map f_U' assigned to the identifier U' among maps f that differ for each identifier, so as to generate a search ciphertext c(s);
a data acquisition unit to acquire an encrypted tag c resulting from converting a keyword w by a map sk_U assigned to an identifier U among the maps sk that differ for each identifier;
a storage tag generation unit to convert the encrypted tag c acquired by the data acquisition unit by a map f_U assigned to the identifier U among the maps f that differ for each identifier, so as to generate a storage tag c'; and
a search unit to identify the storage tag c' that matches the search ciphertext c(s),
characterized in that a composite map obtained by combining one of the maps sk and one of the maps f that are assigned to a same identifier is a map mk common to all the identifiers.

### Advantageous Effects of Invention

The present invention uses a trapdoor t(s) that is converted using a map sk different for each identifier. Therefore, deciphering and spoofing can be prevented.

### Brief Description of Drawings

Fig. 1 is a configuration diagram of a searchable encryption system 10 according to a first embodiment;
Fig. 2 is a configuration diagram of a key generation device 20 according to the first embodiment;
Fig. 3 is a configuration diagram of a data management device 30 according to the first embodiment:
Fig. 4 is a configuration diagram of a registration device 40 according to the first embodiment;
Fig. 5 is a configuration diagram of a search device 50 according to the first embodiment;
Fig. 6 is a flowchart of a common key generation process according to the first embodiment;
Fig. 7 is a flowchart of an individual key generation process according to the first embodiment;
Fig. 8 is a flowchart of a data registration process according to the first embodiment;
Fig. 9 is a flowchart of a data search process according to the first embodiment;
Fig. 10 is a flowchart of a data deletion process according to the first embodiment;

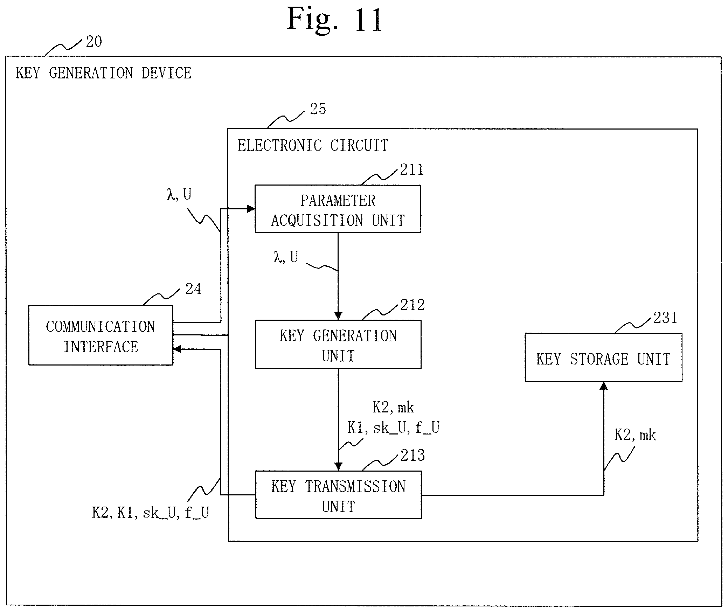

Fig. 11 is a configuration diagram of the key generation device 20 according to a fourth variation;

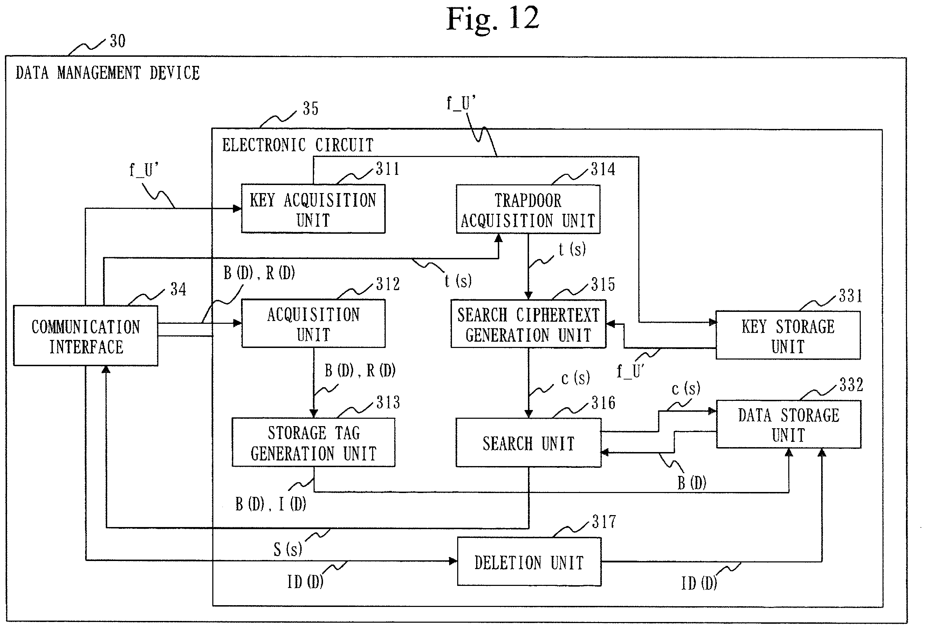

Fig. 12 is a configuration diagram of the data management device 30 according to the fourth variation;

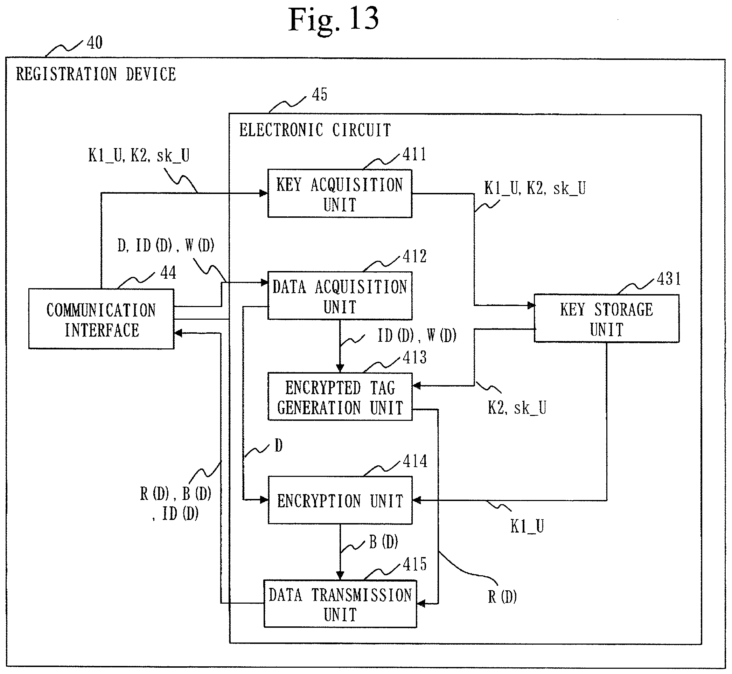

Fig. 13 is a configuration diagram of the registration device 40 according to the fourth variation; and

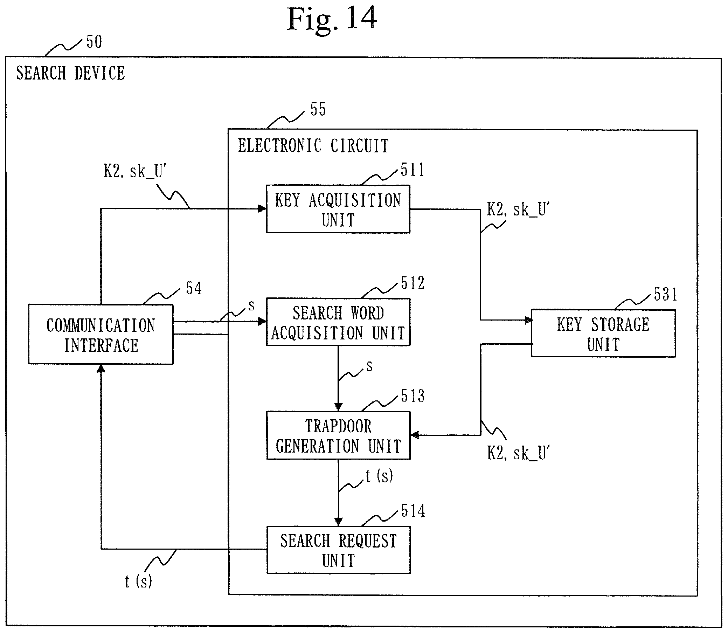

Fig. 14 is a configuration diagram of the search device 50 according to the fourth variation.

### Description of Embodiments

First Embodiment

### ^{∗∗∗} Description of Configuration ^{∗∗∗}

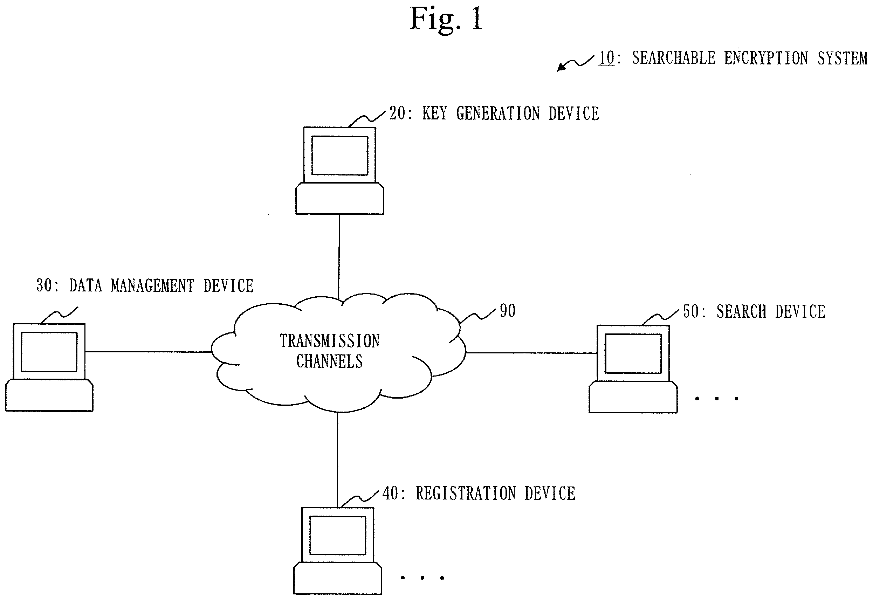

A configuration of a searchable encryption system 10 according to a first embodiment will be described with reference to Fig. 1.

The searchable encryption system 10 includes a key generation device 20, a data management device 30, at least one registration device 40, and at least one search device 50.

The key generation device 20, the data management device 30, the registration device 40, and the search device 50 are connected via transmission channels 90. A specific example of the transmission channels 90 is the Internet or a local area network (LAN).

An identifier is assigned to each registration device 40 and each search device 50.

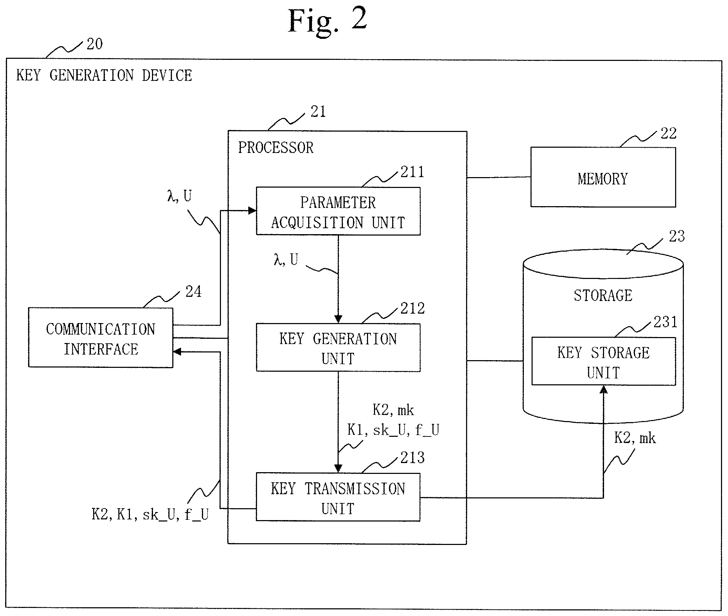

A configuration of the key generation device 20 according to the first embodiment will be described with reference to Fig. 2.

The key generation device 20 includes hardware of a processor 21, a memory 22, a storage 23, and a communication interface 24. The processor 21 is connected with the other hardware components via signal lines and controls the other hardware components.

The key generation device 20 includes, as functional components, a parameter acquisition unit 211, a key generation unit 212, and a key transmission unit 213. The functions of the functional components of the key generation device 20 are realized by software.

The storage 23 stores programs for realizing the functions of the functional components of the key generation device 20. These programs are loaded into the memory 22 by the processor 21 and executed by the processor 21. This realizes the functions of the functional components of the key generation device 20.

The storage 23 realizes the function of a key storage unit 231.

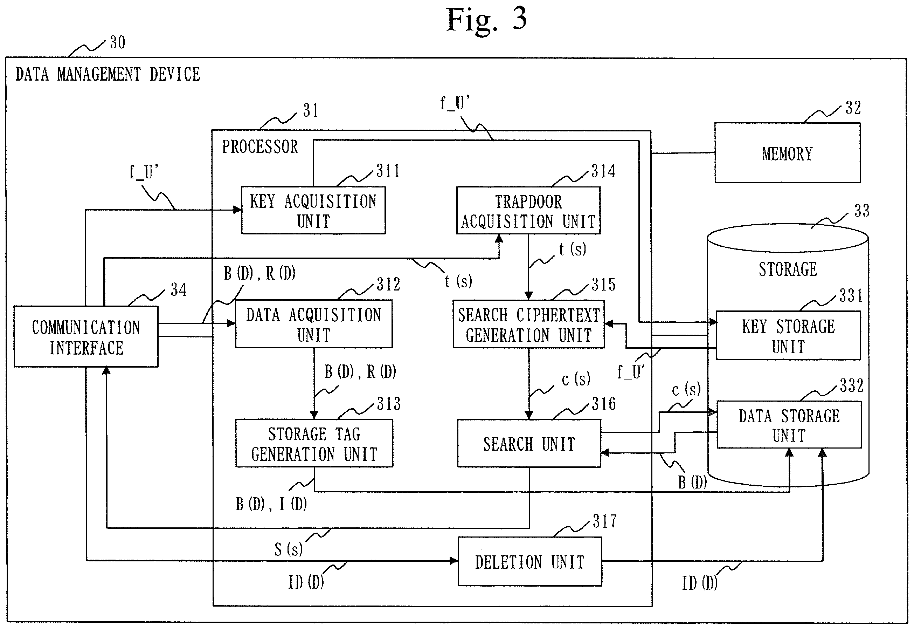

A configuration of the data management device 30 according to the first embodiment will be described with reference to Fig. 3.

The data management device 30 includes hardware of a processor 31, a memory 32, a storage 33, and a communication interface 34. The processor 31 is connected with the other hardware components via signal lines and controls the other hardware components.

The data management device 30 includes, as functional components, a key acquisition unit 311, a data acquisition unit 312, a storage tag generation unit 313, a trapdoor acquisition unit 314, a search ciphertext generation unit 315, a search unit 316, and a deletion unit 317. The functions of the functional components of the data management device 30 are realized by software.

The storage 33 stores programs for realizing the functions of the functional components of the data management device 30. These programs are loaded into the memory 32 by the processor 31 and executed by the processor 31. This realizes the functions of the functional components of the data management device 30.

The storage 33 realizes the functions of a key storage unit 331 and a data storage unit 332.

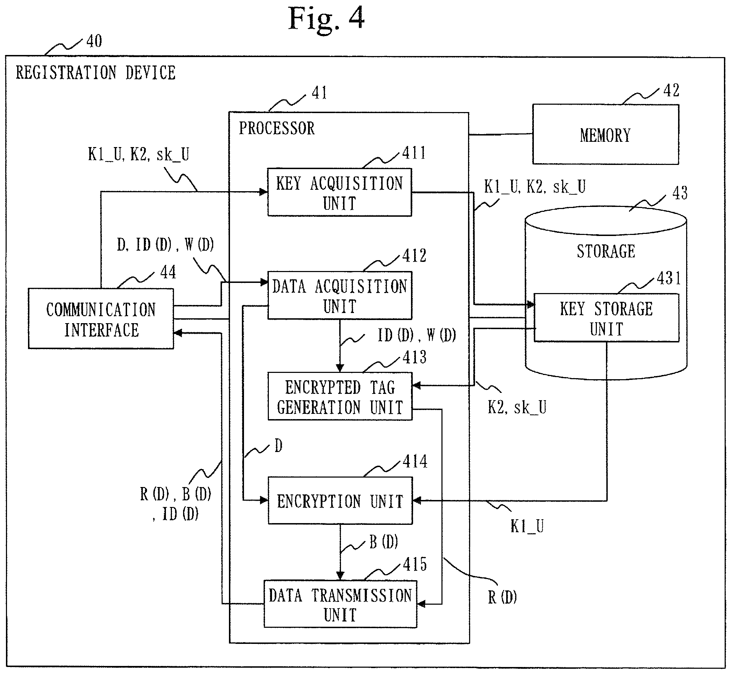

A configuration of the registration device 40 according to the first embodiment will be described with reference to Fig. 4.

The registration device 40 includes hardware of a processor 41, a memory 42, a storage 43, and a communication interface 44. The processor 41 is connected with the other hardware components via signal lines and controls the other hardware components.

The registration device 40 includes, as functional components, a key acquisition unit 411, a data acquisition unit 412, an encrypted tag generation unit 413, an encryption unit 414, and a data transmission unit 415. The functions of the functional components of the registration device 40 are realized by software.

The storage 43 stores programs for realizing the functions of the functional components of the registration device 40. These programs are loaded into the memory 42 by the processor 41 and executed by the processor 41. This realizes the functions of the functional components of the registration device 40.

The storage 43 realizes the function of a key storage unit 431.

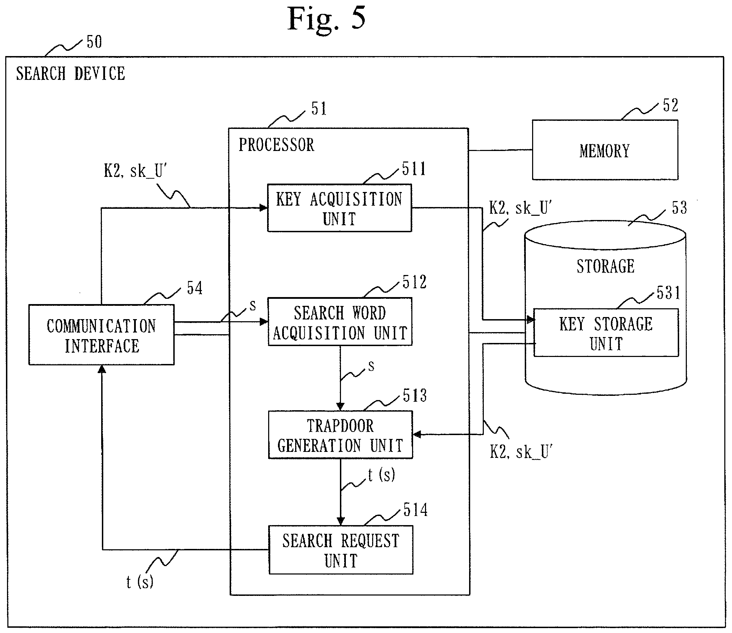

A configuration of the search device 50 according to the first embodiment will be described with reference to Fig. 5.

The search device 50 includes hardware of a processor 51, a memory 52, a storage 53, and a communication interface 54. The processor 51 is connected with the other hardware components via signal lines and controls the other hardware components.

The search device 50 includes, as functional components, a key acquisition unit 511, a search word acquisition unit 512, a trapdoor generation unit 513, and a search request unit 514. The functions of the functional components of the search device 50 are realized by software.

The storage 53 stores programs for realizing the functions of the functional components of the search device 50. These programs are loaded into the memory 52 by the processor 51 and executed by the processor 51. This realizes the functions of the functional components of the search device 50.

The storage 53 realizes the function of a key storage unit 531.

Each of the processors 21, 31, 41, and 51 is an integrated circuit (IC) that performs arithmetic processing. As a specific example, each of the processors 21, 31, 41, and 51 is a central processing unit (CPU), a digital signal processor (DSP), or a graphics processing unit (GPU).

Each of the memories 22, 32, 42, and 52 is a storage device to temporarily store data. As a specific example, each of the memories 22, 32, 42, and 52 is a static random access memory (SRAM) or a dynamic random access memory (DRAM).

Each of the storages 23, 33, 43, and 53 is a storage device to store data. As a specific example, each of the storages 23, 33, 43, and 53 is a hard disk drive (HDD). Alternatively, each of the storages 23, 33, 43, and 53 may be a portable storage medium, such as a Secure Digital (SD, registered trademark) memory card, CompactFlash (CF, registered trademark), a NAND flash, a flexible disk, an optical disc, a compact disc, a Blu-ray (registered trademark) disc, or a digital versatile disc (DVD).

Each of the communication interfaces 24, 34, 44, and 54 is an interface for communicating with external devices. As a specific example, each of the communication interfaces 24, 34, 44, and 54 is an Ethernet (registered trademark) port, a Universal Serial Bus (USB) port, or a High-Definition Multimedia Interface (HDMI, registered trademark) port.

Fig. 2 illustrates only one processor 21. However, the key generation device 20 may include a plurality of processors as an alternative to the processor 21.

Similarly, the data management device 30 may include a plurality of processors as an alternative to the processor 31. The registration device 40 may include a plurality of processors as an alternative to the processor 41. The search device 50 may include a plurality of processors as an alternative to the processor 51.

The plurality of processors share the execution of the programs for realizing the functions of the functional components. Each of the plurality of processors is, like the processors 21, 31, 41, and 51, an IC that performs arithmetic processing.

### ^{∗∗∗} Description of Operation ^{∗∗∗}

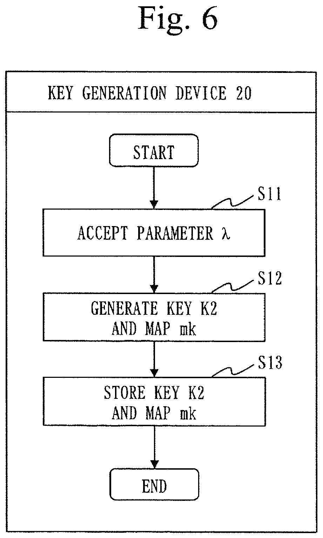

Operation of the searchable encryption system 10 according to the first embodiment will be described with reference to Figs. 6 to 10.

Operation of the key generation device 20 in the operation of the searchable encryption system 10 according to the first embodiment corresponds to a key generation method according to the first embodiment. The operation of the key generation device 20 also corresponds to processes of a key generation program according to the first embodiment.

Operation of the data management device 30 in the operation of the searchable encryption system 10 according to the first embodiment corresponds to a data management method according to the first embodiment. The operation of the data management device 30 also corresponds to processes of a data management program according to the first embodiment.

Operation of the registration device 40 in the operation of the searchable encryption system 10 according to the first embodiment corresponds to a registration method according to the first embodiment. The operation of the registration device 40 also corresponds to processes of a registration program according to the first embodiment.

Operation of the search device 50 in the operation of the searchable encryption system 10 according to the first embodiment corresponds to a search method according to the first embodiment. The operation of the search device 50 also corresponds to processes of a search program according to the first embodiment.

A common key generation process according to the first embodiment will be described with reference to Fig. 6.

The common key generation process is executed by the key generation device 20.

### (Step S11: Parameter acquisition process)

The parameter acquisition unit 211 acquires a parameter λ.

Specifically, the parameter acquisition unit 211 acquires, via the communication interface 24, the parameter λ transmitted from an external device. Alternatively, the parameter acquisition unit 211 acquires the parameter λ input through an input device connected via the communication interface 24. The parameter acquisition unit 211 writes the parameter λ in the memory 22.

### (Step S12: Common key generation process)

The key generation unit 212 generates a key K2 and a map mk.

Specifically, the key generation unit 212 retrieves the parameter λ from the memory 22. The key generation unit 212 generates the key K2 that is random by a random number generator, using as input the parameter λ. The key generation unit 212 generates the map mk arbitrarily. The key generation unit 212 writes the key K2 and the map mk in the memory 22.

The key K2 is a key common to every registration device 40 and every search device 50. That is, the key K2 is a key common to every identifier assigned to every registration device 40 and every search device 50.

The map mk is a map common to every registration device 40 and every search device 50. That is, the map mk is a map common to every identifier assigned to every registration device 40 and every search device 50.

### (Step S13: Key storage process)

The key generation unit 212 retrieves the parameter λ acquired in step S11 as well as the key K2 and the map mk generated in step S12 from the memory 22. The key generation unit 212 writes the parameter λ, the key K2, and the map mk in the key storage unit 231. The key K2 and the map mk are secret information, and are thus stored strictly so as not to be leaked to the outside.

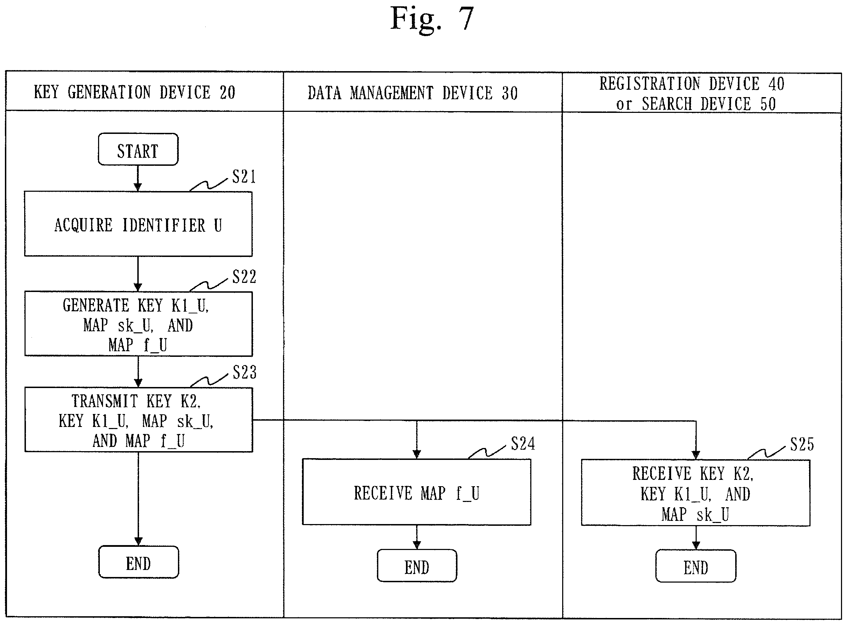

An individual key generation process according to the first embodiment will be described with reference to Fig. 7.

The individual key generation process is executed by the key generation device 20, the data management device 30, and the registration device 40 or the search device 50. Specifically, the processes of step S21 to step S23 are executed by the key generation device 20. The process of step S24 is executed by the data management device 30. The process of step S25 is executed by the registration device 40 or the search device 50.

The individual key generation process may be executed when a request for generation of an individual key is transmitted from the registration device 40 or the search device 50 to the key generation device 20. Alternatively, the individual key generation process may be executed at any time.

### (Step S21: Identifier acquisition process)

The parameter acquisition unit 211 of the key generation device 20 acquires an identifier of a device to be a processing target.

Specifically, the parameter acquisition unit 211 acquires, via the communication interface 24, the identifier transmitted from an external device. Alternatively, the parameter acquisition unit 211 acquires the identifier input through an input device connected via the communication interface 24. The parameter acquisition unit 211 writes the identifier in the memory 22.

It is assumed here that "U" is acquired as the identifier.

### (Step S22: Individual key generation process)

The key generation unit 212 generates a key K1, a map sk, and a map f. The key generation unit 212 generates a key K1_U, a map sk_U, and a map f_U that are associated with the identifier U acquired in step S21.

Specifically, the key generation unit 212 retrieves, from the memory 22, the identifier U acquired in step S21. The key generation unit 212 retrieves the parameter λ and the map mk stored by the common key generation process from the key storage unit 231. The key generation unit 212 generates the key K1_U that is random by the random number generator, using as input the identifier U and the parameter λ. The key generation unit 212 generates the map sk_U and the map f_U, using as input the map mk. At this time, the key generation unit 212 generates the map sk_U and the map f_U such that a composite map resulting from composing the map sk_U and the map f_U is the map mk. That is, mk = f_U·sk_U. The key generation unit 212 writes the key K1_U, the map sk_U, and the map f_U in the memory 22.

An example of a method for generating the map sk_U and the map f_U will be described.

The key generation unit 212 generates the map mk as mk(x) = x^{c} for an element x of a group with order n. The key generation unit 212 randomly selects integers a and b that satisfy ab = c(mod n). The key generation unit 212 generates the map sk_U = x^{a} and the map f_U = x^{b}.

The key K1 is a key that is different for each registration device 40 and each search device 50. That is, the key K1 is a key that is different for each identifier assigned to each registration device 40 and each search device 50.

The map sk and the map f are maps that are different for each registration device 40 and each search device 50. That is, the map sk and the map f are maps that are different for each identifier assigned to each registration device 40 and each search device 50. The composite map of the map sk and the map f that are assigned to the same identifier is the map mk common to every identifier.

### (Step S23: Key transmission process)

The key transmission unit 213 retrieves the key K2 stored by the common key generation process from the memory 22, and retrieves the key K1- U, the map sk_U, and the map f_U generated in step S22 from the memory 22.

The key transmission unit 213 transmits the map f_U to the data management device 30 via the communication interface 24. The key transmission unit 213 transmits the key K1_U, the key K2, and the map sk_U to the registration device 40 or the search device 50 associated with the identifier U via the communication interface 24.

### (Step S24: First key acquisition process)

The key acquisition unit 311 of the data management device 30 receives, via the communication interface 34, the map f_U transmitted in step S23. The key acquisition unit 311 writes the received map f_U in the key storage unit 331. The map f_U is secret information, and is thus stored strictly so as not to be leaked to the outside.

### (Step S25: Second key acquisition process)

The registration device 40 or the search device 50 associated with the identifier U operates.

When the registration device 40 is associated with the identifier U, the key acquisition unit 411 receives, via the communication interface 44, the key K1_U, the key K2, and the map sk_U transmitted in step S23. The key acquisition unit 411 writes the received key K1_U, key K2, and map sk_U in the key storage unit 431.

When the search device 50 is associated with the identifier U, the key acquisition unit 511 receives, via the communication interface 54, the key K1_U, the key K2, and the map sk_U transmitted in step S23. The key acquisition unit 511 writes the received K1_U, key K2, and map sk_U in the key storage unit 531.

The key K1_U, the key K2, and the map sk_U are secret information, and are thus stored strictly so as not to be leaked to the outside. Note that when the search device 50 is associated with the identifier U, the transmission of the key K1_U may be omitted.

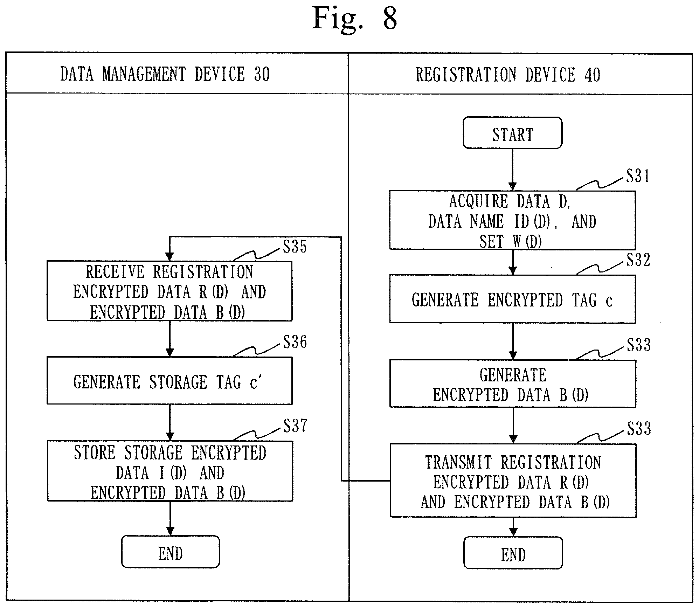

A data registration process according to the first embodiment will be described with reference to Fig. 8.

The data registration process is executed by the data management device 30 and the registration device 40. Specifically, the processes of step S31 to step S34 are executed by the registration device 40. The processes of step S35 to step S37 are executed by the data management device 30.

It is assumed here that the data registration process is executed by the registration device 40 having the identifier U.

### (Step S31: Data acquisition process)

The data acquisition unit 412 of the registration device 40 acquires data D to be registered, a data name ID(D), which is a name with which the data D can be identified, and a set W(D) of keywords w for searching for the data D.

Specifically, the data acquisition unit 412 acquires, via the communication interface 44, the data D, the data name ID(D), and the set W(D) that are transmitted from an external device. Alternatively, the data acquisition unit 412 acquires the data D, the data name ID(D), and the set W(D) that are input through an input device connected via the communication interface 24. The data acquisition unit 412 writes the data D, the data name ID(D), and the set W(D) in the memory 42.

### (Step S32: Encrypted tag generation process)

The encrypted tag generation unit 413 generates an encrypted tag c for each keyword w included in the set W(D) acquired in step S31.

Specifically, the encrypted tag generation unit 413 retrieves the data name ID(D) and the set W(D) from the memory 42. The encrypted tag generation unit 413 retrieves the key K2 and the map sk_U from the key storage unit 431. With regard to each keyword w included in the set W(D), the encrypted tag generation unit 413 encrypts the keyword w concerned to generate the encrypted tag c. The encrypted tag generation unit 413 generates the encrypted tag c by calculating c = sk U(E(K2, w)), where E is an encryption function. The encryption functions that can be employed include an encryption function of a common-key encryption scheme such as Advanced Encryption Standard (AES), a message authentication function such as Hash-based Message Authentication Code (HMAC), and a hash function such as Secure Hash Algorithm-256 (SHA-256). That is, the encrypted tag generation unit 413 generates the encrypted tag c by encrypting the keyword w concerned with the key K2, using the encryption function E, and then converting the encrypted keyword w by the map sk_U.

The encrypted tag generation unit 413 writes a pair of the data name ID(D) and a set C(D) of the encrypted tags c in the memory 42 as registration encrypted data R(D).

Note that when E(K2, w) is not a value that can be input to the map sk_U, the value is encoded by any method, so as to be converted into a value that can be input to the map sk_U.

### (Step S33: Encryption process)

The encryption unit 414 encrypts the data D acquired in step S31, so as to generate encrypted data B(D).

Specifically, the encryption unit 414 retrieves the data D and the data name ID(D) from the memory 42. The encryption unit 414 retrieves the key K1_U from the key storage unit 431. The encryption unit 414 encrypts the data D to generate the encrypted data B(D). The encryption unit 414 generates the encrypted data B(D) by calculating B(D) = E(K1_U, D), where E is an encryption function. The encryption functions that can be employed include an encryption function of a common-key encryption scheme such as AES, a message authentication function such as HMAC, and a hash function such as SHA-256, as in step S32. Alternatively, the encryption function may be an encryption function such as ID-based encryption or attribute-based encryption. That is, the encryption unit 414 generates the encrypted data B(D) by encrypting the data D with the key K1_U, using the encryption function E. The encryption unit 414 writes the encrypted data B(D) in the memory 42.

### (Step S34: Data transmission process)

The data transmission unit 415 retrieves the registration encrypted data R(D) generated in step S32 and the encrypted data B(D) generated in step S33 from the memory 42. The data transmission unit 415 transmits the registration encrypted data R(D) and the encrypted data B(D) to the data management device 30 via the communication interface 44.

### (Step S35: Data reception process)

The data acquisition unit 312 of the data management device 30 receives, via the communication interface 34, the registration encrypted data R(D) and the encrypted data B(D) transmitted in step S34. The data acquisition unit 312 writes the registration encrypted data R(D) and the encrypted data B(D) in the memory 32.

### (Step S36: Storage tag generation process)

The storage tag generation unit 313 generates a storage tag c' for each encrypted tag c included in the set C(D) in the registration encrypted data R(D) received in step S35.

Specifically, the storage tag generation unit 313 retrieves the registration encrypted data R(D) from the memory 32. The storage tag generation unit 313 retrieves the map f_U from the key storage unit 331. With regard to each encrypted tag c included in the set C(D) in the registration encrypted data R(D), the storage tag generation unit 313 converts the encrypted tag c concerned by the map f_U, so as to generate the storage tag c'. That is, the storage tag generation unit 313 generates the storage tag c' by calculating c' = f_U(c).

The storage tag generation unit 313 writes a pair of the data name ID(D) and a set C'(D) of the storage tags c' in the memory 32 as storage encrypted data I(D).

The storage tag c' is generated by converting the encrypted keyword w by the map sk_U and further converting the converted encrypted keyword w by the map f_U. The composite map of the map sk and the map f that are assigned to the same identifier is the map mk common to every identifier. Therefore, regardless of which registration device 40 executes the data registration process, the storage tag c' is generated by converting the encrypted keyword w by the map mk.

### (Step S37: Index addition process)

The storage tag generation unit 313 adds the storage encrypted data I(D) generated in step S36 to an encrypted index I. The encrypted index I is stored in the data storage unit 332. The storage tag generation unit 313 writes the encrypted data B(D) received in step S35 in the data storage unit 332.

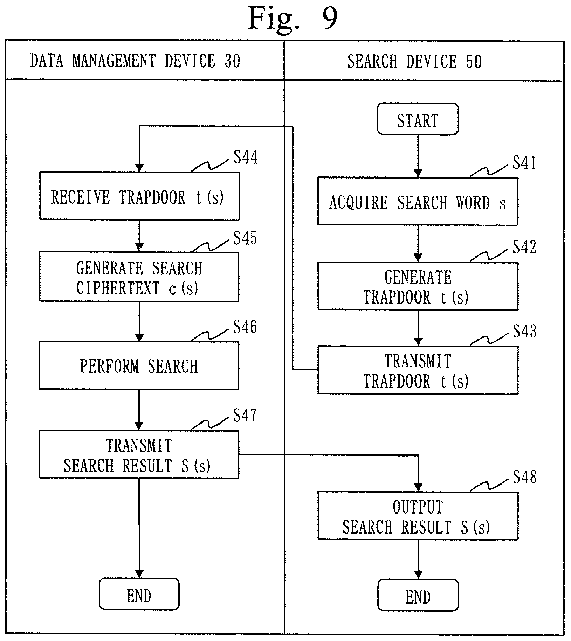

A data search process according to the first embodiment will be described with reference to Fig. 9.

The data search process is executed by the data management device 30 and the search device 50. Specifically, the processes of step S41 to step S43 and step S48 are executed by the search device 50. The processes of step S44 to step S47 are executed by the data management device 30.

It is assumed here that the data search process is executed by the search device 50 having the identifier U'.

### (Step S41: Search word acquisition process)

The search word acquisition unit 512 of the search device 50 acquires a search word s, which is a keyword for searching for the data D.

Specifically, the search word acquisition unit 512 acquires, via the communication interface 44, the search word s transmitted from an external device. Alternatively, the search word acquisition unit 512 acquires the search word s input through an input device connected via the communication interface 24. The search word acquisition unit 512 writes the search word s in the memory 52.

### (Step S42: Trapdoor generation process)

The trapdoor generation unit 513 generates a trapdoor t(s) of the search word s acquired in step S41.

Specifically, the trapdoor generation unit 513 retrieves the search word s from the memory 52. The trapdoor generation unit 513 retrieves the key K2 and the map sk_U' from the key storage unit 53 1. The trapdoor generation unit 513 encrypts the search word s to generate the trapdoor t(s). The trapdoor generation unit 513 generates the trapdoor t(s) by calculating t(s) = sk_U'(E(K2, s)), where E is the same encryption function as the encryption function used in step S32. That is, the trapdoor generation unit 513 generates the trapdoor t(s) by encrypting the search word s with the key K2, using the encryption function E, and then converting the encrypted search word s by the map sk_U. The trapdoor generation unit 513 writes the trapdoor t(s) in the memory 52.

Note that when E(K2, s) is not a value that can be input to the map sk_U, the value is encoded by the same method as in step S32 of Fig. 8, so as to be converted into a value that can be input to the map sk_U.

### (Step S43: Search request process)

The search request unit 514 retrieves the trapdoor t(s) generated in step S42 from the memory 52. The search request unit 514 transmits the trapdoor t(s) to the data management device 30 via the communication interface 54.

### (Step S44: Search request reception process)

The trapdoor acquisition unit 314 of the data management device 30 receives, via the communication interface 34, the trapdoor t(s) transmitted in step S43. The trapdoor acquisition unit 314 writes the trapdoor t(s) in the memory 32.

### (Step S45: Search ciphertext generation process)

The search ciphertext generation unit 315 generates a search ciphertext c(s) from the trapdoor t(s) acquired in step S44.

Specifically, the search ciphertext generation unit 315 retrieves the trapdoor t(s) from the memory 32. The search ciphertext generation unit 315 retrieves the map f_U' from the key storage unit 331. The search ciphertext generation unit 315 converts the trapdoor t(s) by the map f U', so as to generate the search ciphertext c(s). That is, the search ciphertext generation unit 315 generates the search ciphertext c(s) by calculating c(s) = f_U'(t(s)). The search ciphertext generation unit 315 writes the search ciphertext c(s) in the memory 32.

The search ciphertext c(s) is generated by converting the encrypted search word s by the map sk_U and further converting the converted encrypted search word s by the map f_U'. The composite map of the map sk and the map f that are assigned to the same identifier is the map mk common to every identifier. Therefore, regardless of which search device 50 executes the data search process, the search ciphertext c(s) is generated by converting the encrypted search word s by the map mk.

### (Step S46: Search process)

The search unit 316 extracts, from the encrypted index I, storage encrypted data I(D) including as the storage tag c' the search ciphertext c(s) generated in step S45.

Specifically, the search unit 316 retrieves the search ciphertext c(s) from the memory 32. The search unit 316 extracts the storage encrypted data I(D) including as the storage tag c' the search ciphertext c(s), out of pieces of the storage encrypted data I(D) stored in the data storage unit 332, using techniques such as binary search and a hash table. The search unit 316 identifies the encrypted data B(D) indicated by the data name ID(D) included in the extracted storage encrypted data I(D). The search unit 316 writes a set including each piece of the identified encrypted data B(D) in the memory 32 as a search result S(s).

Note that a set including the data name ID(D) included in each piece of the extracted storage encrypted data I(D) may be treated as the search result S(s).

As described above, regardless of which registration device 40 executes the data registration process, the storage tag c' is generated by converting the encrypted keyword w by the map mk. Regardless of which search device 50 executes the data search process, the search ciphertext c(s) is generated by converting the encrypted search word s by the map mk. Therefore, in the data search process executed by any search device 50, a search can be performed over pieces of data registered by all registration devices 40.

### (Step S47: Result transmission process)

The search unit 316 retrieves the search result S(s) written in step S46 from the memory 32. The search unit 316 transmits the search result S(s) to the search device 50 via the communication interface 34.

### (Step S48: Result reception process)

The search request unit 514 of the search device 50 receives, via the communication interface 54, the search result S(s) transmitted in step S47. The search request unit 514 outputs the search result S(s) to a display device or the like via the communication interface 54.

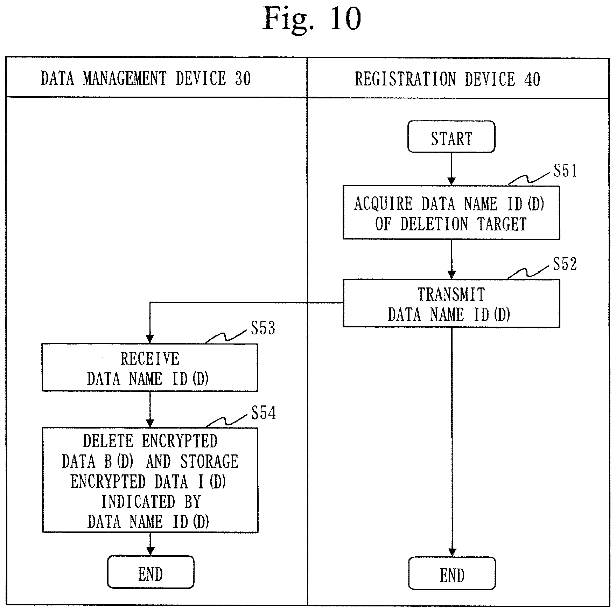

A data deletion process according to the first embodiment will be described with reference to Fig. 10.

The data deletion process is executed by the data management device 30 and the registration device 40. Specifically, the processes of step S51 and step S52 are executed by the registration device 40. The processes of step S53 and step S54 are executed by the data management device 30.

### (Step S51: Deletion name acquisition process)

The data acquisition unit 412 acquires the data name ID(D) of a deletion target.

Specifically, the data acquisition unit 412 acquires, via the communication interface 44, the data name ID(D) transmitted from an external device. Alternatively, the data acquisition unit 412 acquires the data name ID(D) input through an input device connected via the communication interface 24. The data acquisition unit 412 writes the data name ID(D) in the memory 42.

### (Step S52: Deletion request process)

The data transmission unit 415 retrieves the data name ID(D) written in step S51 from the memory 42. The data transmission unit 415 transmits the data name ID(D) to the data management device 30 via the communication interface 44.

### (Step S53: Deletion request reception process)

The deletion unit 317 of the data management device 30 receives, via the communication interface 34, the data name ID(D) transmitted in step S52. The deletion unit 317 writes the data name ID(D) in the memory 32.

### (Step S54: Deletion process)

The deletion unit 317 retrieves the data name ID(D) written in step S53 from the memory 32. The deletion unit 317 deletes the encrypted data B(D) indicated by the data name ID(D) from the data storage unit 332. The deletion unit 317 also deletes the storage encrypted data I(D) including the data name ID(D) from the encrypted index I.

### ^{∗∗∗} Effects of First Embodiment ^{∗∗∗}

As described above, in the searchable encryption system 10 according to the first embodiment, each registration device 40 and each search device 50 use a different key K1 and a different map sk. Therefore, deciphering of encrypted tags and trapdoors and spoofing can be prevented.

In the searchable encryption system 10 according to the first embodiment, conversion is performed using the map f in the data registration process and the data search process. Therefore, by having the data management device 30 delete the map f_U^{∗} for a target identifier U^{∗} from the key storage unit 331, the authority of the registration device 40 or the search device 50 to which the target identifier U^{∗} is assigned can be canceled.

In the searchable encryption system 10 according to the first embodiment, the search process in step S46 of Fig. 9 can be executed at high speed, as in the existing common-key searchable encryption. Although the conversion of the trapdoor t(s) requires processing time, the volume of calculations for the conversion of the trapdoor t(s) is one calculation or a fixed number of calculations. Therefore, data can be searched for faster than the existing public-key searchable encryption.

In the searchable encryption system 10 according to the first embodiment, a search can be performed over pieces of data registered by all registration devices 40 in the data search process executed by any search device 50. That is, the encrypted index I can be used commonly regardless of the registration device 40 and the search device 50. Therefore, the capacity of the storage 33 to store the encrypted index I can be reduced.

### Reference Signs List

10: searchable encryption system, 20: key generation device, 21: processor, 22: memory, 23: storage, 24: communication interface, 25: electronic circuit, 211: parameter acquisition unit, 212: key generation unit, 213: key transmission unit, 231: key storage unit, 30: data management device, 31: processor, 32: memory, 33: storage, 34: communication interface, 35: electronic circuit, 311: key acquisition unit, 312: data acquisition unit, 313: storage tag generation unit, 314: trapdoor acquisition unit, 315: search ciphertext generation unit, 316: search unit, 317: deletion unit, 331: key storage unit, 332: data storage unit, 40: registration device, 41: processor, 42: memory, 43: storage, 44: communication interface, 45: electronic circuit, 411: key acquisition unit, 412: data acquisition unit, 413: encrypted tag generation unit, 414: encryption unit, 415: data transmission unit, 431: key storage unit, 50: search device, 51: processor, 52: memory, 53: storage, 54: communication interface, 55: electronic circuit, 511: key acquisition unit, 512: search word acquisition unit, 513: trapdoor generation unit, 514: search request unit, 531: key storage unit, 90: transmission channels

## Claims

1. A data management device (30) comprising:
a trapdoor acquisition unit (314) to acquire a trapdoor t(s) resulting from converting a search word s by a map sk_U' assigned to an identifier U' among maps sk that differ for each identifier;
a search ciphertext generation unit (315) to convert the trapdoor t(s) acquired by the trapdoor acquisition unit (314) by a map f_U' assigned to the identifier U' among maps f that differ for each identifier, so as to generate a search ciphertext c(s);
a data acquisition unit (312) to acquire an encrypted tag c resulting from converting a keyword w by a map sk_U assigned to an identifier U among the maps sk that differ for each identifier;
a storage tag generation unit (313) to convert the encrypted tag c acquired by the data acquisition unit (312) by a map f_U assigned to the identifier U among the maps f that differ for each identifier, so as to generate a storage tag c'; and
a search unit (316) to identify the storage tag c' that matches the search ciphertext c(s),
**characterized in that** a composite map obtained by combining one of the maps sk and one of the maps f that are assigned to a same identifier is a map mk common to all the identifiers.

2. The data management device (30) according to claim 1,
wherein the storage tag c' is written in a data storage unit (332), and
wherein the search unit (316) searches for a storage tag c' corresponding to the search ciphertext c(s) generated by the search ciphertext generation unit (315) among storage tags c' stored in the data storage unit (332).

3. A data management method comprising:
acquiring a trapdoor t(s) resulting from converting a search word s by a map sk_U' assigned to an identifier U' among maps sk that differ for each identifier, by a trapdoor acquisition unit (314) of a data management device (30);
converting the trapdoor t(s) by a map f_U' assigned to the identifier U' among maps f that differ for each identifier, so as to generate a search ciphertext c(s), by a search ciphertext generation unit (315) of the data management device (30);
acquiring an encrypted tag c resulting from converting a keyword w by a map sk_U assigned to an identifier U among maps sk that differ for each identifier, by a data acquisition unit (312) of the data management device (30);
converting the encrypted tag c by a map f_U assigned to the identifier U among maps f that differ for each identifier, so as to generate a storage tag c', by a storage tag generation unit (313) of the data management device (30); and
identifying the storage tag c' that matches the search ciphertext c(s), by a search unit (316) of the data management device (30),
**characterized in that** a composite map obtained by combining one of the maps sk and one of the maps f that are assigned to a same identifier is a map mk common to all the identifiers.

4. A data management program for causing a computer to execute:
a trapdoor acquisition process to acquire a trapdoor t(s) resulting from converting a search word s by a map sk_U' assigned to an identifier U' among maps sk that differ for each identifier;
a search ciphertext generation process to convert the trapdoor t(s) acquired by the trapdoor acquisition process by a map f_U' assigned to the identifier U' among maps f that differ for each identifier, so as to generate a search ciphertext c(s);
a data acquisition process to acquire an encrypted tag c resulting from converting a keyword w by a map sk_U assigned to an identifier U among maps sk that differ for each identifier;
a storage tag generation process to convert the encrypted tag c acquired by the data acquisition process by a map f_U assigned to the identifier U among maps f that differ for each identifier, so as to generate a storage tag c'; and
a search process to identify the storage tag c' that matches the search ciphertext c(s),
**characterized in that** a composite map obtained by combining one of the maps sk and one of the maps f that are assigned to a same identifier is a map mk common to all the identifiers.

## Patentansprüche

1. Datenverwaltungseinrichtung (30), umfassend:
eine Trapdoor-Erwerbungseinheit (314), um eine Trapdoor t(s), resultierend aus Konvertierung eines Suchworts s durch eine einem Identifizierer U' zugeordnete Zuordnung sk_U' unter Zuordnungen sk, die sich für jeden Identifizierer unterscheiden;
eine Suchchiffretext-Generierungseinheit (315), um die durch die Trapdoor-Erwerbungseinheit (314) erworbene Trapdoor t(s) durch eine dem Identifizierer U' zugeordnete Zuordnung f_U' unter Zuordnungen f, die sich für jeden Identifizierer unterscheiden, zu konvertieren, um einen Suchchiffretext c(s) zu generieren;
einen Datenerwerbungsprozess (312), um ein verschlüsseltes Tag c, resultierend aus Konvertierung eines Schlüsselworts w durch eine einem Identifizierer U zugeordnetee Zuordnung sk_U unter den Zuordnungen sk, die sich für jeden Identifizierer unterscheiden, zu erwerben;
eine Speicher-Tag-Generierungseinheit (313), um das durch die Datenerwerbungseinheit (312) erworbene verschlüsselte Tag c durch eine dem Identifizierer U zugeordnete Zuordnung f_U unter den Zuordnungen f, die sich für jeden Identifizierer unterscheiden, zu konvertieren, um ein Speicher-Tag c' zu generieren; und
eine Sucheinheit (316), um das Speicher-Tag c', das mit dem Suchchiffretext c(s) übereinstimmt, zu identifizieren,
**dadurch gekennzeichnet, dass** eine zusammengesetzte Zuordnung, die durch Kombinieren einer der Zuordnungen sk und einer der Zuordnungen f, die einem gleichen Identifizierer zugeordnet sind, erhalten wird, eine allen Identifizierern gemeinsame Zuordnung mk ist.

2. Datenverwaltungseinrichtung (30) nach Anspruch 1,
wobei das Speicher-Tag c' in eine Datenspeichereinheit (332) geschrieben wird, und
wobei die Sucheinheit (316) unter den in der Datenspeichereinheit (332) gespeicherten Speicher-Tags c' nach einem Speicher-Tag c' sucht, das dem Suchchiffretext c(s) entspricht, der durch die Suchchiffretext-Generierungseinheit (315) generiert wurde.

3. Datenverwaltungsverfahren, umfassend:
Erwerben einer Trapdoor t(s), resultierend aus Konvertierung eines Suchwortes s durch eine einem Identifizierer U' zugeordnete Zuordnung sk_U' unter Zuordnungen sk, die sich für jeden Identifizierer unterscheiden, durch eine Trapdoor-Erwerbungseinheit (314) einer Datenverwaltungseinrichtung (30);
Konvertieren der Trapdoor t(s) durch eine dem Identifizierer U' zugeordnete Zuordnung f_U' unter Zuordnungen f, die sich für jeden Identifizierer unterscheiden, um einen Suchchiffretext c(s) zu generieren, durch eine Suchchiffretext-Generierungseinheit (315) der Datenverwaltungseinrichtung (30);
Erwerben eines verschlüsselten Tags c, resultierend aus Konvertierung eines Schlüsselworts w durch eine Zuordnung sk_U, die einem Identifizierer U unter den Zuordnungen sk zugeordnet ist, die sich für jeden Identifizierer unterscheiden, durch eine Datenerwerbungseinheit (312) der Datenverwaltungseinrichtung (30);
Konvertieren des verschlüsselten Tag c durch eine dem Identifizierer U zugeordnete Zuordnung f_U unter Zuordnungen f, die sich für jeden Identifizierer unterscheiden, um ein Speicher-Tag c' zu generieren, durch eine Speicher-Tag-Generierungseinheit (313) der Datenverwaltungseinrichtung (30); und
Identifizieren des Speicher-Tags c', das mit dem Suchchiffretext c(s) übereinstimmt, durch eine Sucheinheit (316) der Datenverwaltungseinrichtung (30),
**dadurch gekennzeichnet, dass** eine zusammengesetzte Zuordnung, die durch Kombinieren einer der Zuordnungen sk und einer der Zuordnungen f, die einem gleichen Identifizierer zugeordnet sind, erhalten wird, eine allen Identifizierern gemeinsame Zuordnung mk ist.

4. Datenverwaltungsprogramm zum Veranlassen eines Computers, auszuführen:
einen Trapdoor-Erwerbungsprozess, um eine Trapdoor t(s) zu erwerben, resultierend aus Konvertierung eines Suchworts s durch eine einem Identifizierer U' zugeordnete Zuordnung sk_U' unter Zuordnungen sk, die sich für jeden Identifizierer unterscheiden;
einen Suchchiffretext-Generierungsprozess, um die durch den Trapdoor-Erwerbungsprozess erworbene Trapdoor t(s) durch eine dem Identifizierer U' zugeordnete Zuordnung f_U' unter Zuordnungen f, die sich für jeden Identifizierer unterscheiden, zu konvertieren, um einen Suchchiffretext c(s) zu generieren;
einen Datenerwerbungsprozess, um ein verschlüsseltes Tag c, resultierend aus Konvertierung eines Schlüsselworts w durch eine einem Identifizierer U zugeordnete Zuordnung sk_U unter den Zuordnungen sk, die sich für jeden Identifizierer unterscheiden, zu erwerben;
einen Speicher-Tag-Generierungsprozess, um das verschlüsselte Tag c, das durch den Datenerwerbungsprozess erworben wurde, durch eine dem Identifizierer U zugeordnete Zuordnung f_U unter den Zuordnungen f, die sich für jeden Identifizierer unterscheiden, zu konvertieren, um ein Speicher-Tag c' zu generieren; und
einen Suchprozess, um das Speicher-Tag c', das mit dem Suchchiffretext c(s) übereinstimmt, zu identifizieren,
**dadurch gekennzeichnet, dass** eine zusammengesetzte Zuordnung, die durch Kombinieren einer der Zuordnungen sk und einer der Zuordnungen f, die einem gleichen Identifizierer zugeordnet sind, erhalten wird, eine allen Identifizierern gemeinsame Zuordnung mk ist.

## Revendications

1. Dispositif de gestion de données (30) comprenant :
une unité d'acquisition de trappe (314) pour acquérir une trappe t(s) résultant de la conversion d'un mot de recherche s par une carte sk_U' attribuée à un identifiant U' parmi des cartes sk qui diffèrent pour chaque identifiant ;
une unité de génération de texte chiffré de recherche (315) pour convertir la trappe t(s) acquise par l'unité d'acquisition de trappe (314) par une carte f_U' attribuée à l'identifiant U' parmi les cartes f qui diffèrent pour chaque identifiant, de façon à générer un texte chiffré de recherche c(s) ;
une unité d'acquisition de données (312) pour acquérir une étiquette chiffrée c résultant de la conversion d'un mot clé w par une carte sk_U affectée à un identifiant U parmi les cartes sk qui diffèrent pour chaque identifiant ;
une unité de génération d'étiquette de stockage (313) pour convertir l'étiquette chiffrée c acquise par l'unité d'acquisition de données (312) par une carte f_U attribuée à l'identifiant U parmi les cartes f qui diffèrent pour chaque identifiant, de manière à générer une étiquette de stockage c' ; et
une unité de recherche (316) pour identifier l'étiquette de stockage c' qui correspond au cryptogramme de recherche c(s),
**caractérisé en ce qu'**une carte composite obtenue en combinant l'une des cartes sk et l'une des cartes f qui sont attribuées à un même identifiant est une carte mk commune à tous les identifiants.

2. Dispositif de gestion de données (30) selon la revendication 1,
dans lequel l'étiquette de stockage c' est écrite dans une unité de stockage de données (332), et
dans lequel l'unité de recherche (316) recherche une étiquette de stockage c' correspondant au texte chiffré de recherche c(s) généré par l'unité de génération de texte chiffré de recherche (315) parmi les étiquettes de stockage c' stockées dans l'unité de stockage de données (332).

3. Procédé de gestion de données comprenant :
l'acquisition d'une trappe t(s) résultant de la conversion d'un mot de recherche s par une carte sk_U' attribuée à un identifiant U' parmi des cartes sk qui diffèrent pour chaque identifiant, par une unité d'acquisition de trappe (314) d'un dispositif de gestion de données (30) ;
la conversion de la trappe t(s) par une carte f_U' attribuée à l'identifiant U' parmi des cartes f qui diffèrent pour chaque identifiant, de manière à générer un texte chiffré de recherche c(s), par une unité de génération de texte chiffré de recherche (315) du dispositif de gestion de données (30) ;
l'acquisition d'une étiquette chiffrée c résultant de la conversion d'un mot clé w par une carte sk_U attribuée à un identifiant U parmi des cartes sk qui diffèrent pour chaque identifiant, par une unité d'acquisition de données (312) du dispositif de gestion de données (30) ;
la conversion de l'étiquette chiffrée c par une carte f_U attribuée à l'identifiant U parmi les cartes f qui diffèrent pour chaque identifiant, de manière à générer une étiquette de stockage c', par une unité de génération d'étiquette de stockage (313) du dispositif de gestion de données (30) ; et
l'identification de l'étiquette de stockage c' qui correspond au texte chiffré de recherche c(s), par une unité de recherche (316) du dispositif de gestion de données (30),
**caractérisé en ce qu'**une carte composite obtenue en combinant l'une des cartes sk et l'une des cartes f qui sont attribuées à un même identifiant est une carte mk commune à tous les identifiants.

4. Programme de gestion de données pour amener un ordinateur à exécuter :
un processus d'acquisition de trappe pour acquérir une trappe t(s) résultant de la conversion d'un mot de recherche s par une carte sk_U' attribuée à un identifiant U' parmi des cartes sk qui diffèrent pour chaque identifiant ;
un processus de génération de texte chiffré de recherche pour convertir la trappe t(s) acquise par le processus d'acquisition de trappe par une carte f_U' attribuée à l'identifiant U' parmi les cartes f qui diffèrent pour chaque identifiant, de façon à générer un texte chiffré de recherche c(s) ;
un processus d'acquisition de données pour acquérir une étiquette chiffrée c résultant de la conversion d'un mot clé w par une carte sk_U attribuée à un identifiant U parmi des cartes sk qui diffèrent pour chaque identifiant ;
un processus de génération d'étiquette de stockage pour convertir l'étiquette chiffrée c acquise par le processus d'acquisition de données par une carte f_U attribuée à l'identifiant U parmi les cartes f qui diffèrent pour chaque identifiant, de façon à générer une étiquette de stockage c' ; et
un processus de recherche pour identifier l'étiquette de stockage c' qui correspond au texte chiffré de recherche c(s),
**caractérisé en ce qu'**une carte composite obtenue en combinant l'une des cartes sk et l'une des cartes f qui sont attribuées à un même identifiant est une carte mk commune à tous les identifiants.
